(19) Europäisches Patentamt

European Patent Office

Office européen des brevets

(11) **EP 1 612 778 A2**

(12) **EUROPEAN PATENT APPLICATION**

(43) Date of publication:
**04.01.2006 Bulletin 2006/01**

(51) Int Cl.:
*G11B 7/00* (2006.01)

(21) Application number: **05254048.1**

(22) Date of filing: **29.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **29.06.2004 KR 2004049706**

(71) Applicant: **SAMSUNG ELECTRONICS CO., LTD.**
**Suwon-si,**
**Gyeonggi-do (KR)**

(72) Inventors:
• **Kim, Seok-jung**
**Yeongtong-gu,Suwon-si,Gyeonggi-do (KR)**

• Pae, Jung-gug
Yeongtong-gu,Suwon-si,Gyeonggi-do (KR)
• Ahn, Young- man
Gwonseon-gu,Suwon-si,Gyeonggi-do (KR)
• Chung, Chong-sam, Hyundai Apt.
Hwaseong-si,Gyeonggi-do (KR)
• Kim, Tae-Kyung
Youngdeungpo-gu,Seoul (KR)

(74) Representative: **Brandon, Paul Laurence et al**
**APPLEYARD LEES,**
**15 Clare Road**
**Halifax HX1 2HY (GB)**

(54) **Optical pickup and apparatus and method for assembling a plurality of lenses**

(57)     An optical pickup and a lens assembling apparatus and a method thereof are provided. The optical pickup includes a plurality of objective lenses (41,45) and a lens holder (50). The lens holder (50) has a plurality of installation holes (57,59) Into which the objective lenses (41,45) are inserted. In the lens holder (50), a seat surface (55a) of at least one of the installation holes (55) is formed as a curved surface so that an inclination adjustment of the objective lens (45) Installed thereon can be performed. Since the seat surface (55a) of at least one of the installation holes (55) of the lens holder (50) is formed as a curved surface to enable inclination adjustment of the lens (45), Inclination adjustment between the plurality of objective lenses (51,45) can be performed without an increase in the number of the parts or an increase in the number of the assembling processes.

FIG. 4

EP 1 612 778 A2

## Description

The present invention relates to optical pickups, to apparatus for assembling a plurality of lenses and to methods of assembling a plurality of lenses.

In an optical recording and/or reproducing apparatus for recording arbitrary information on an optical information storage medium and/or reproducing the information recorded on the optical information storage medium using a light spot obtained by condensing laser light using an objective lens, a recording capacity is determined by a size of the light spot condensed by the objective lens. The condensed spot size S is given by Equation 1 with a wavelength $\lambda$ of the laser light used and a numerical aperture (NA) of the objective lens.

$$S \alpha \lambda / NA \quad (1)$$

Therefore, to reduce the light spot size focused onto the optical information storage medium for a high density of the optical information storage medium, research on an optical recording and/or reproducing apparatus is being conducted in a direction that adopts a light source of a short wavelength such as a blue laser and an objective lens having NA of more than 0.6.

Intensive research for increasing information storage capacity by increasing a recording density has been made since a compact disc (CD), where recording and/or reproducing of information is performed using light of a wavelength of 780nm and anobjective lens having an NA of 0.45 or 0.5, was introduced. As a result of the research, a digital versatile disc (DVD), where recording and/or reproducing of information is performed using light of a wavelength of 650nm and an objective lens having an NA of 0.6 or 0.65, has been developed.

Currently, research on a high-density optical information storage medium having a recoding capacity of more than 20 giga bytes (GB) using light of a blue wavelength, e.g., a wavelength of 405nm is constantly carried out

Standardization of the high-density optical information storage medium is being actively carried out and part of the standards whose development has been almost completed, uses light of a blue wavelength, e.g., a wavelength of 405nm. At this point, the proposed NA of the objective lens for the high-density optical information storage medium is 0.65 or 0.85 as described below.

The thickness of CDs is 1.2mm. The reason why disc thickness has been reduced to 0.6mm for the DVD to maintain tilt tolerance despite of the increase of the NA has been raised from 0.45 for the CD to 0.6 for the DVD.

Further, if the NA of the objective lens for the high-density optical information storage medium is raised to 0.85 in case of the high-density optical information storage medium having a large capacity greater than the DVD, a thickness of the high-density optical information storage medium should be reduced to about 0.1mm.

For a medium such that the NA of the objective lens is raised and the thickness of the optical information storage medium is made thin, there exists a Blu-ray disc (referred to as BD hereinafter). In a BD standard, a wavelength of a light source is 405nm, an NA of the objective lens is 0.85, and a thickness of the optical information storage medium is about 0.1mm.

For a high-density optical information storage medium currently under development, there exists a high definition digital versatile disc (HD DVD) besides the BD. An HD DVD standard is a standard such that a substrate thickness is the same as the DVD, the NA of the objective lens is the same as the DVD, but a wavelength of the light source is a blue wavelength, e.g., 405nm as is in the BD standard.

It is problematic to develope optical discs of a new standard which are compatible with earlier, conventional optical discs.

To perform recording/reproducing using optical discs having different recording densities in a compatible manner, a working distance (WD) of the objective lens focusing a light spot onto the optical disc should be different, so that at least two objective lenses need to be provided.

An actuator for an optical pickup includes a magnetic circuit so as to operate in both focus and track directions. The magnetic circuit maintains constant an interval between the optical disc and the objective lens in the focus direction and moves the objective lens to a desired track position (track center) in the track direction.

A compatible optical pickup adopting a plurality of optical discs having different recording densities requires objective lenses that correspond to the plurality of optical discs having the different recording densities, respectively.

Therefore, at least two objective lenses are arranged in a radial direction of the optical disc in a single lens holder so that compatibility may be secured.

In case of the optical pickup where only one objective lens is mounted in the lens holder of a moving unit of the actuator, the objective lens is assembled to the lens holder and then an alignment between the objective lens and an optical axis is accurately obtained using an actuator skew supported by a mold of the lens holder. In case of mounting two objective lenses in the lens holder, since only an alignment between one of the two objective lenses and an optical axis can be obtained using the actuator skew and a tilt allowance angle between the two objective lenses should be strictly limited, there is a possibility that an optical pickup performance cannot be secured.

The Japanese patent publication No. 10-11765 discloses an optical disc apparatus having an adjusting device adjusting an inclination of an objective lens so that central axes of two objective lenses may be parallel. In case of the Japanese patent publication, the objective lens to be adjusted is mounted in a separate lens housing and the lens housing is inclination-adjusted with respect to a lens holder, so that an inclination adjustment between the two objective lenses may be performed.

However, the separate lens housing mounted according to the Japanese patent publication may be relatively bulky and not offer a full range of inclination adjustment. Also, the lens housing part cannot easily be added to a conventional lens holder part. Finally, the number of assembly processes required is high, as is the number of parts.

An aim of preferred embodiments of the present invention is to address the abovementioned problems.

According to a first aspect, the present invention provides an optical pickup comprising: a plurality of objective lenses and a lens holder having a plurality of installation holes, each installation hole having a seat surface to receive one of the plurality of objective lenses, wherein at least on of the seat surfaces is formed as a curved surface so that inclination of a central axis of the objective lens received therein is adjustable.

According to a second aspect of the present invention, there is provided an optical pickup comprising: a plurality of objective lenses; a lens holder having a plurality of installation holes for receiving the plurality of objective lenses and having a seat surface of at least one of the installation holes formed as a curved surface so that an inclination adjustment of the objective lens installed in the curved seat surface can be performed.

The seat surface may be formed as a spherical surface.

An inner diameter or an outer diameter of the seat surface may be at least 0.05mm smaller or 0.05 mm greater, respectively, than a medium position of the seat surface. The outer diameter of the seat surface may be at least 0.05mm greater than an outer diameter of the objective lens.

The plurality of objective lenses may include a first objective lens appropriate for a blu-ray disk (BD); and a second objective lens appropriate for a high density digital versatile disc (HD DVD), a digital versatile disc (DVD), or a compact disc (CD).

Further, the plurality of objective lenses may include a first objective lens appropriate for at least one of a BD or an HD DVD and a second objective lens appropriate for at least one of a DVD and a CD.

According to a third aspect, the present invention provides an apparatus for assembling a plurality of objective lenses in a plurality of installation holes of a lens holder of the above-described optical pickup so that central axes of the objective lenses are parallel, each installation hole having a seat surface to receive one of the plurality of objective lenses, at least one of the Installation holes being formed as a curved surface, the apparatus comprising: a mount having a seat part for seating the lens holder; a plurality of lens Jigs for pressing the plurality of objective lenses respectively installed into the installation holes; an inclination adjustment device for adjusting an inclination of the objective lens inserted into the at least one installation hole having the curved seat surface using the lens jig; a laser light illumination unit for setting a reference point and illuminating laser light for aligning central axes of the objective lenses with respect to the reference point; and a base for mounting the mount, the plurality of lens jigs, and the inclination adjustment device.

According to a fourth aspect of the present invention there is provided an apparatus, for assembling a plurality of objective lenses in a plurality of installation holes of the lens holder of the above-described optical pickup so that central axes of the objective lenses are parallel to one another, includes: a mount having a seat part on which the lens holder where the objective lenses are respectively Inserted into the plurality of installation holes is seated; a plurality of lens jigs pressing the plurality of objective lenses respectively installed into the installation holes; an inclination adjustment device adjusting an inclination of the objective lens inserted into the installation hole having the curved seat surface using the lens jig; a laser light illumination unit setting a reference point and illuminating laser light for aligning central axes of the objective lenses with respect to the reference point; and a base on which the mount, the plurality of lens jigs, the inclination adjustment device are mounted.

One of the installation holes formed on the lens holder may be formed to have a non-curved seat surface, a reference point may be set by using laser light illuminated onto the objective lens inserted into the installation hole having the non-curved seat surface, and a central axis of the remaining objective lenses may be aligned with the reference point.

All of the plurality of Installation holes may be formed to have curved seat surfaces, a reference point may be set by using laser light illuminated onto a predetermined position of the lens holder, and central axes of a plurality of objective lenses installed In the plurality of installation holes may be aligned with the reference point.

A linear movement device changing a position on which the laser light is illuminated may be further provided.

The linear movement device may be installed at the base so as to change a position on which laser light is illuminated by moving the mount.

The objective lens assembling apparatus may further comprise at least one of an X-stage, a Y-stage, or an X-Y stage matching a center of at least one objective lens with a center of a respective opening in the lens holder by moving the objective lens with respect to the center of the installation hole of the lens holder after relative inclination adjustment between the plurality of objective lenses.

The inclination adjustment device may include a gonio stage.

A front end of the lens jig pressing the objective lens may be formed to expose a partial portion of an outer periphery of the objective lens so that the light illuminated to the objective lens from the laser light illumination unit may be reflected by the partial portion of the outer partial periphery of the objective lens.

A front end of the lens jig may be formed such as to expose at least three regions of the outer periphery of the objective lens.

According to a fifth aspect, the present invention provides a method of assembling a plurality of objective lenses in a plurality of installation holes of the lens holder of the optical pickup of any one of claims 1 through 6 so that central axes of the objective lenses are parallel, the method comprising: configuring the lens holder such that at least one of the plurality of Installation holes is formed with a curved seat surface to adjust an inclination of an objective lens installed thereon and another of the plurality of installation holes is formed with a non-curved seat surface; seating the lens holder on a seat part of a mount; pressing and fixing a first objective lens into the installation hole having the non-curved seat surface; illuminating laser light onto the first objective lens to set a reference point on a target; and illuminating laser light onto a second objective lens inserted into the installation hole having the curved seat surface and pressing the second objective lens; comparing an optical path of light reflected by the second objective lens with the reference point on the target; and adjusting an inclination of the second objective lens so that the central axes of the first and second objective lenses are parallel.

According to a sixth aspect of the present Invention there is provided a method of assembling a plurality of objective lenses In a plurality of Installation holes of the lens holder of an optical pickup, so that central axes of the objective lenses may be parallel, the method comprising: configuring the lens holder such that a seat surface of at least one of the plurality of Installation holes is formed as a curved surface to adjust an Inclination of an objective lens Installed in the installation hole having the curved seat surface and another installation hole has a non-curved seat surface; seating the lens holder in which the objective lenses are respectively inserted into the plurality of installation holes on a seat part of a mount; pressing and fixing a reference objective lens inserted into the installation hole having the non-curved seat surface using one lens jig; illuminating laser light onto the reference objective lens to set a reference point on a target; illuminating the laser light onto an objective lens inserted into an installation hole having the curved seat surface and pressurized with another lens jig; comparing an optical path of light reflected by the objective lens inserted in the Installation hole having the curved seat surface with the reference point on the target; and adjusting an inclination of the objective lens inserted in the curved seat so that central axes of the reference objective lens and the objective lens inserted in the curved seat are in parallel, using an inclination adjustment device.

The method may further include matching a center of at least one of the objective lenses with the center of a respective installation hole in the lens holder by moving the objective lens with respect to the center of the respective Installation hole in lens holder after a relative inclination adjustment between the plurality of objective tenses.

According to a seventh aspect, the present invention provides a method of assembling a plurality of objective lenses in a plurality of installation holes of a lens holder of the above-described optical pickup so that central axes of the objective lenses are parallel, the method comprising: configuring the lens holder such that a seat surface of each of the plurality of installation holes is formed as a curved surface to adjust an inclination of the objective lens installed thereon; seating the lens holder in which the objective lenses are respectively inserted into the plurality of installation holes on a seat part of a mount and pressing the respective objective lenses into respective seat surfaces; illuminating laser light onto a predetermined position of the lens holder to set a reference point on a target; and illuminating the laser light onto the respective objective lenses; comparing an optical path of light reflected by each objective lens with the reference point on the target; and adjusting an inclination of each objective lens so that the central axes of the respective objective lenses are aligned.

According to an eighth aspect of the present invention there is provided a method of assembling a plurality of objective lenses in a plurality of installation holes of the lens holder of the optical pickup so that central axes of the objective lenses may be in parallel includes: configuring the lens holder such that a seat surface of the each of a plurality of installation holes is formed as a curved surface to adjust an inclination of an objective lens installed in a respective installation hole; seating the lens holder on a seat of a mount; pressing the respective objective lenses into respective installation holes using lens jigs; illuminating laser light onto a predetermined position of the lens holder to set a reference point on a target; illuminating the laser light onto the respective objective lenses; comparing an optical path of light reflected by each objective lens with the reference point on the target; and adjusting an inclination of each objective lens so that central axes of the respective objective lenses may be aligned, using an inclination adjustment device.

The method may further include matching a center of at least one of the objective lenses with the center of the respective installation hole of the lens holder by moving the objective lens with respect to the center of the installation hole of the lens holder after a relative inclination adjustment between the plurality of objective lenses.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:

FIG. 1 is a schematic view of a construction of an optical pickup according to an embodiment of the present invention;
FIG. 2A Is a view illustrating the lens holder of FIG. 1;
FIG. 2B is an expanded view of a portion of FIG. 2A;
FIG. 3A is a view illustrating a lens holder according to another embodiment of the present invention;
FIG. 3B is an expanded view of a portion of FIG. 3A;
FIG. 3C is an expanded view of another portion of FIG. 3A;
FIG. 4 is a view illustrating an optical construction of an optical pickup according to an embodiment of the present invention;
FIG. 5 is a schematic view of a whole system of a lens assembling apparatus according to an embodiment of the present invention;
FIG. 6 is an enlarged view of a part of FIG. 5;
FIG. 7 is an enlarged view of a lens fixing jig and a lens adjustment jig of FIG. 5;
FIG. 8 is a schematic view of a whole system of a lens assembling apparatus according to another embodiment of the present invention; and
FIG. 9 is a schematic view of a construction of an optical recording and/or reproducing apparatus employing an optical pickup of according to an aspect of the present invention.

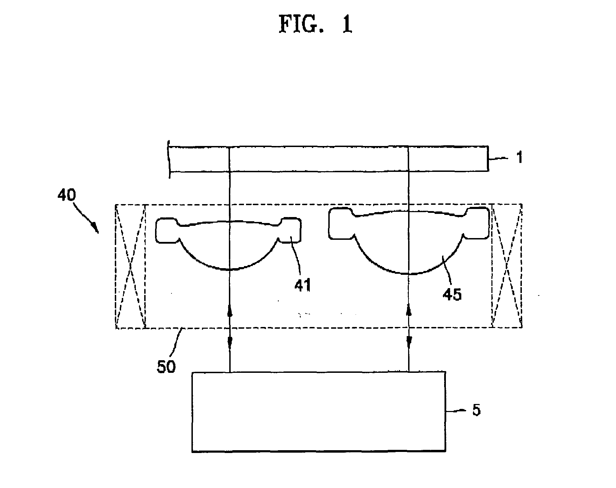

FIG. 1, shows an optical pickup according to an embodiment of the present invention may including: an optical unit 5 illuminating light onto an optical disc 1 and receiving light reflected by an optical disc 1 to detect an information signal and/or an error signal; a plurality of objective lenses, e.g., first and second objective lenses 45 and 41 mounted In a singe lens holder 50 and condensing incident light to allow the incident light to be focused as a light spot on a recording surface of the optical disc 1; and an actuator operable to drive a moving unit having the lens holder 50 mounting the first and second objective lenses 45 and 41 in a focus direction, a tracking and/or a tilt direction. The lens holder 50 has a plurality of installation holes and at least one installation hole has a curved seat surface formed so as to adjust an inclination of an objective lens inserted therein.

The first and second objective lenses 45 and 41 have different specifications. For example, the first objective lens 45 may be formed to have a high NA, e.g., about 0.85 for the BD (Blu-ray Disc) and optimized in recording and/or reproducing the BD whose thickness is about 0.1mm using light having a blue wavelength, e.g., a wavelength of 405nm. The second objective lens 41 may be optimized for recording and/or reproducing at least one of the HD DVD, the DVD and the CD.

Here, for the HD DVD, the second objective lens 41 may be formed to have an NA of about 0.65 and optimized for recording and/or reproducing the HD DVD whose thickness is about 0.6mm using light having a wavelength of 405nm.

Further, the first objective lens 45 may be formed to be appropriate for recording and/or reproducing the HD DVD or the BD and the HD DVD, and the second objective lens 41 may be formed to be appropriate for recording and/or reproducing at least one of the DVD and the CD in a compatible manner.

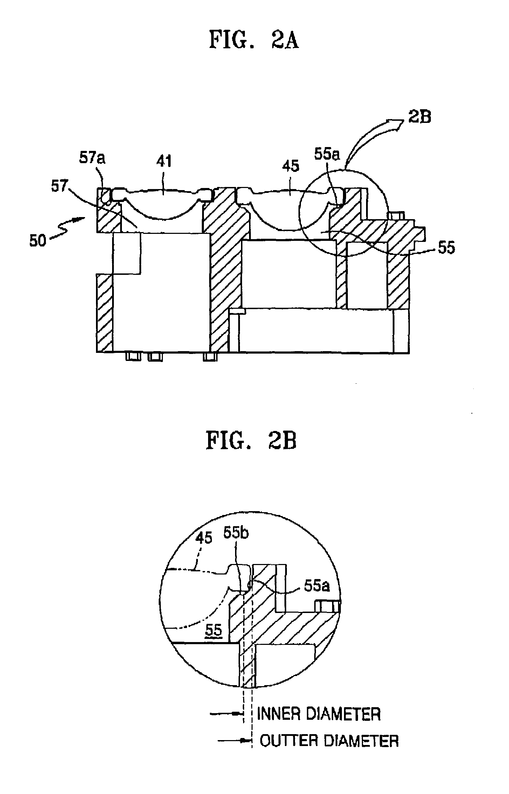

FIGS. 2A and 2B are views illustrating a lens holder of FIG. 1 according to an embodiment of the present invention. Referring to FIG. 2, the lens holder 50 has first and second installation holes 55 and 57 In which the first and second objective lenses 45 and 41, respectively, are installed. The first and second installation holes 55 and 57 are arranged in a radial direction of the optical disc 1 so that the first and second objective lenses 45 and 41 may be arranged in the radial direction of the optical disc 1.The first installation hole 55 and the first objective lens 45 may be positioned on an outer periphery compared with the second installation hole 57 and the second objective lens 41. As an alternative, the first installation hole 55 and the first objective lens 45 may be positioned on an inner periphery compared with the second installation hole 57 and the second objective lens 41.

A seat surface of at least one installation hole of the first and second installation holes 55 and 57 may be formed as a curved surface, such as for example, a spherical surface so that an inclination of the objective lens installed therein can be adjusted.

FIG. 2 illustrates an example where a seat surface 55a of the first installation hole 55 in which the first objective lens 45 for a high-density optical disc is installed is formed as a curved surface and a seat surface 57a of the second installation hole 57 in which the second objective lens 41 for a relatively low-density optical disc is installed is formed as a plane surface.

Where the seat surface 55a is formed as a spherical surface, a middle position of the spherical surface In the seat surface 55a of the first installation hole 55 line-contacts an outer edge of a bottom (reference plane) on an outer periphery of the first objective lens 45. The line-contact position may deviate slightly from the middle position of the spherical surface depending on an inclination adjustment of the first objective lens 45. An inner diameter or an outer diameter of the seat surface 55a may be at least 0.05mm smaller or greater, respectively, than the middle position of the spherical surface.

Further, the outer diameter of the seat surface 55a may coincide with an outer diameter of the first installation hole 55 of the lens holder 50 supporting an outer periphery of the first objective lens 45 and may be at least 0.05mm greater than an outer diameter of the first objective lens 45.

Where the lens holder 50 Is formed as illustrated in FIGS. 2 and 2A, the first and second objective lenses 45 and 41 may be installed in the lens holder 50 in the following manner so that a relative inclination between the first and second objective lenses 45 and 41 is minimized.

With the first and second objective lenses 45 and 41 inserted into and seated on the first and second installation holes 55 and 57, respectively, the second objective lens 41 is fixed. After that, an inclination of the first objective lens 45 Is adjusted so that a central axis of the first objective lens 45 is parallel with a central axis of the second objective lens 41 using the second objective lens 41 as a reference. Since the seat surface 55a of the first installation hole 55 is a curved surface, if the first objective lens 45 is pressed so that force applied to at least one point on an outer periphery of the first objective lens 45 is different from force applied to other points, the first objective lens 45 slides a little along the curved surface, whereby the inclination is adjusted. During the adjustment, when the central axis of the first objective lens 45 becomes parallel with the central axis of the second objective lens 41, the first objective lens 45 is fixed.

Alternatively, the seat surface 55a of the first installation hole 55 may be formed as a plane and the seat surface 57a of the second Installation hole 57 may be formed as a curved surface, so that a relative inclination of the second objective lens 41 is adjustable with respect to the first objective lens 45 so that the central axes thereof are parallel.

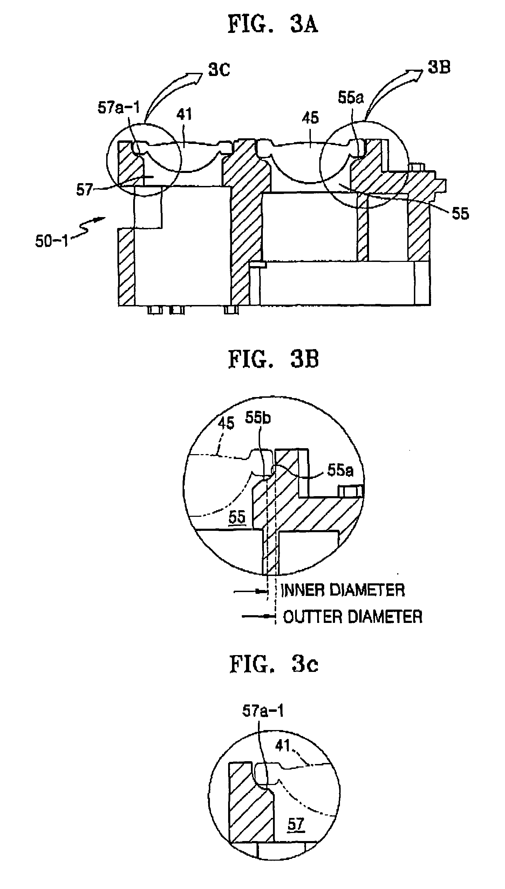

Further, referring to FIGS. 3A-3C, a lens holder 50-1 may be configured such that both the seat surfaces 55a and 57a-1 of the first and second installation holes 55 and 57 are formed as a curved surface and the inclinations of the first and second objective lenses 45 and 41 may be adjusted, respectively, whereby the central axes thereof may be made parallel. Where the lens holder is constructed as shown in FIGS. 3A-3C, the inclinations of the first and second objective lenses 45 and 41 are adjusted using a predetermined position of the lens holder 50-1 for a reference.

As described above, since the optical pickup according to an aspect of the present invention has the lens holder 50 or 50-1 such that the seat surface of at least one installation hole of the first and second installation holes 55 and 57 in which the first and second objective lenses 45 and 41 are Inserted is formed in a curved plane, the first and second objective lenses 45 and 41 may be assembled to the lens holder 50 or 50-1 so that the relative inclination is not generated between the central axes of the assembled lenses 45 and 41.

The first and second objective lenses 45 and 41 may be assembled to the lens holder 50 or 50-1 without a relative inclination between the central axes of the lenses 45 and 41 in the above-described optical pickup using a lens assembling apparatus that is described below.

As described above, the optical pickup according to an embodiment of the present invention includes a plurality of objective lenses mounted in the single lens holder such that a curved seat surface is formed in at least one installation hole so as to perform inclination adjustment. Other optical construction and construction of the actuator may be modified in various ways.

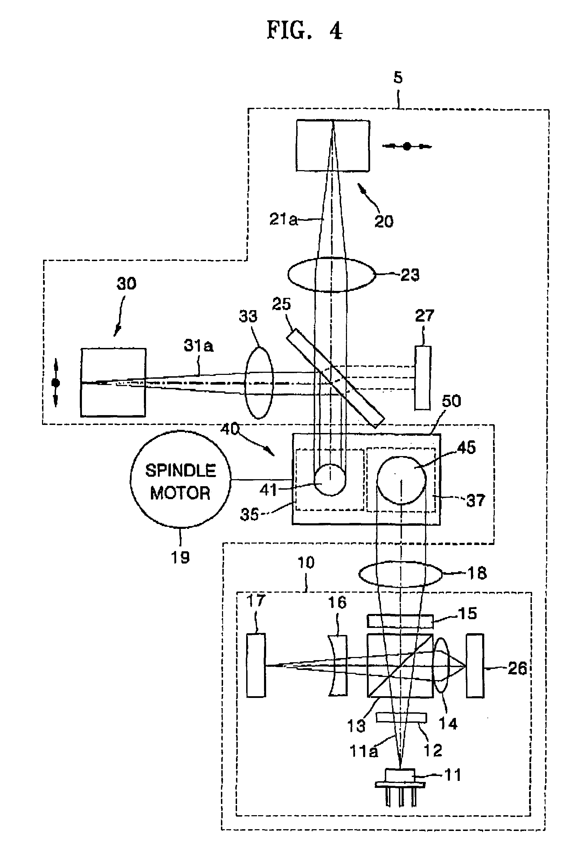

FIG. 4 is a view illustrating construction of an optical pickup according to an embodiment of the present invention.

Referring to FIG. 4, the optical pick may have a construction that uses an optical system intended for a high-density optical disc whose recording density is higher than a DVD and an optical system intended for a low-density disc such as a DVD and/or the CD, respectively, and that uses an actuator 40 in common. Here, the high-density optical disc may be at least one of the BD and the HD DVD.

FIG. 4 illustrates an exemplary construction where the optical pickup allows an optical path of light emitted from the optical unit 5 to be bent by reflection mirrors 37 and 35 and Incident to the first and second objective lenses 45 and 41, respectively. Of course, a construction where the reflection mirrors 37 and 35 are excluded and the light emitted from the optical unit 5 is directly Incident to the first and second objective lenses 45 and 41 may be used.

The example optical pickup unit 5, comprises: first and second optical units 10 and 20 emitting first and second lights 11 a and 21 a, respectively, of wavelengths appropriate for the high-density optical disc and the DVD and receiving the first and second light 11a and 21a returning after being reflected by the optical disc 1 (FIG. 1) to detect an information reproduction signal and/or an error signal; a first optical path changer 25 arranged between the second optical unit 20 and the second objective lens 41; a first collimating lens 18 arranged between the first optical unit 10 and the reflection mirror 37 for the high-density optical disc; and a second collimating lens 23 arranged between the second optical unit 20 and the first optical path changer 25. The disc 1 is rotated in operation by a spindle motor 19.

With the above construction, the optical pickup according to an embodiment of the present invention is compatible with the high-density optical disc and the DVD.

The optical unit 5 may further comprise: a third optical unit 30 emitting third light 31a of a wavelength appropriate for a CD and receiving the third light 31a returning after being reflected by the optical disc 1 (FIG. 1) to detect an information reproduction signal and/or an error signal; and a third collimating lens 33 arranged between the third optical unit 30 and the first optical path changer 25.

With the above construction, the optical pickup is compatible with the CD, the high-density optical disc, and the DVD.

Referring to FIG. 4, the first optical unit 10 may comprise: a blue light source 11 emitting the first light 11a of a blue wavelength, e.g., a wavelength of 405nm appropriate for the high-density optical disc; a polarizing beam splitter 13 transmitting or reflecting the incident first light 11a depending on a polarization state of the incident first light 11a; a quarter-wave plate 15 for the wavelength of the first light 11a, changing a polarization of the first light 11a; a photodetector 17 receiving the first light 11a returning after being reflected by the optical disc 1 (FIG. 1) to detect an information reproduction signal and/or an error signal; and a detection lens 16 arranged between the polarizing beam splitter 13 and the photodetector 17.

The detection lens 16 may be an astigmatism lens generating an astigmatism for the incident first light 11a to allow a focus error signal by an astigmatism method to be detected.

In order to control an optical power of the blue light source 11, the optical unit 10 may further comprise a monitoring photodetector 26, detecting the first light 11a emitted from the first source 11 and partially reflected by the polarizing beam splitter 13. Further, the first optical unit 10 may further comprise a condensing lens 14 condensing the first light 11a reflected by the polarizing beam splitter 13 to allow the light to be properly gathered to the monitoring photodetector 26.

For the second optical unit 20, a holographic optical module for a red wavelength, e.g., a wavelength of 650nm appropriate for the DVD may be provided.

Further, for the third optical unit 30, a holographic optical module for a near infrared wavelength, e.g., a wavelength of 780nm appropriate for the CD may be provided.

A typical holographic optical module includes: a light source emitting light of a predetermined wavelength, e.g., a wavelength of 650nm or 780nm; a photodetector arranged on one side of the light source to receive light returning after being reflected by the optical disc 1 and to detect an information signal and/or an error signal; a hologram optical element transmitting in a straight manner most of the light incident from the light source and diffracting by +1 or -1 degree the light returning back by being reflected from the optical disc 1 to direct the diffracted light to the photodetector. The holographic optical module may further include a grating generating a sub-beam so as to detect a tracking error signal using, for example, a differential push-pull method.

Where the grating is provided, the photodetector of the holographic optical module has a structure for detecting a tracking error signal using the differential push-pull method.

Like the case of the first optical unit 10, the second and the third optical units 20 and 30 may have an optical construction where the light source and the photodetector are separated, instead of having a construction of the holographic optical module.

Further, the first optical unit 10 may have a holographic optical module for a blue wavelength, e.g., a wavelength of 405nm intended for a high-density optical disc. The first optical path changer 25 is arranged between the second and the third optical units 20 and 30 and the second objective lens 41 to direct the second and the third lights 21a and 31a incident from the second and the third optical units 20 and 30 to the second objective lens 41 and allow the second and the third lights 21a and 31a returning after being reflected by the optical disc 1 to return to the second and third optical units 20 and 30. The first optical path changer 25 may be a plate-type beam splitter having a mirror plane that transmits the second light 21a and total-reflects the third light 31a.

The first collimating lens 18 is arranged between the first optical unit 10 and the first objective lens 45 to change the first light 11a incident in a form of diverging light from the first optical unit 10 into parallel light to allow the light to be incident to the first objective lens 45.

Where the first collimating lens 18 changing the first light 11a into the parallel light is provided as described above, the first objective lens 45 Is designed to be optimized for the first light 11a which is the parallel light.

The second collimating lens 23 is arranged between the second optical unit 20 and the first optical path changer 25. The second collimating lens 23 changes the second light 21a incident in form of diverging light from the second optical unit 20 into the parallel light.

The third collimating lens 33 is arranged between the third optical unit 30 and the first optical path changer 25. The third collimating lens 33 changes the third light 31a incident in form of diverging light from the third optical unit 30 into the parallel light.

In the above, although description has been made for a case where the optical pickup has the first through the third collimating lenses 18, 23, and 33 to allow the parallel light to be incident to the first and second objective lenses 45 and 41, the optical pickup may not have at least one of the first through the third collimating lenses 18, 23, and 33 or can allow a little converging or diverging light to be Incident to the first and/or the second objective lenses 45 and 41 so that the optical system for at least one of the high-density optical disc, the DVD, and the CD may be a finite optical system.

The optical unit 5 may further include the monitoring photodetector 27 for monitoring optical output quantity of the second and/or the third optical units 20 and 30 on one side of the first optical path changer 25.

FIG. 4 illustrates just one example of an optical construction of the optical unit 5 according to aspects of the present invention, so the optical unit 5 is not limited In application to use with the optical construction of FIG. 4.

The first objective lens 45 may be formed to generate an optimized light spot for recording and/or reproducing the high-density optical disc having the highest density among the high-density optical disc, the DVD, and the CD.

For example, where the first light source 11 emits the first light 11a of a bluish-purple wavelength, e.g., a wavelength of 405nm and the high-density optical disc has a thickness of 0.1mm. i.e. the optical disc is the BD, the first objective lens 45 may have a high NA of 0.85. Here, the high-density optical disc is the HD DVD, the first objective lens 45 may have an NA of 0.65.

The second objective lens 45 may be formed to generate an optimized light spot for recording and/or reproducing the low-density optical disc, e.g., the DVD and/or the CD.

That is, where the optical pickup adopts the CD compatibly as well as the high-density optical disc and the DVD as illustrated in FIG. 4, the second objective lens 41 may be optimized for the DVD and be formed to also be compatible with the CD.

Further, where the optical pickup is of a high-density optical disc and DVD- compatible type, the second objective lens 41 may be optimized for the DVD.

Further, where the optical pickup is of a BD and HD DVD-compatible type, the first objective lens 45 may be optimized for the BD and the second objective lens 41 may be optimized for the HD DVD.

The actuator 40 may be a single actuator structure mounting the first and second objective lenses 45 and 41 to the single lens holder 50 or 50-1.

The actuator 40 includes: a base (not shown) where a holder (not shown) is fixedly installed; the single lens holder 50 or 50-1 in which the first and second objective lenses 45 and 41 are installed; a plurality of suspensions (not shown) whose one end (not shown) is fixedly combined to the lens holder 50 or 50-1 and whose other end (not shown) is fixedly combined to the holder (not shown), and movably supporting the lens holder 50 and 50-1; and a magnetic circuit (not shown) operating the lens holder 50 and 50-1 to a focus direction, a track and/or tilt directions.

Except for the first and second objective lenses 45 and 41, the remaining optical parts are arranged on the base. Further, part of the magnetic circuit, for example, coils are installed in the lens holder 50 or 50-1 and the remaining magnetic parks, I.e., a magnet and yokes are arranged on the base. The lens holder 50 or 50-1, the first and second objective lenses 45 and 41, and the part of the magnetic circuit installed in the lens holder 50 or 50-1 constitute a moving unit of the optical pickup assembly.

Hereinafter, a detailed embodiment of an objective lens assembling apparatus and a method therefor, assembling the plurality of objective lenses 45 and 41 to the lens holder 50 or 50-1 of the optical pickup without the relative inclination between the objective lenses 45 and 41 will be described.

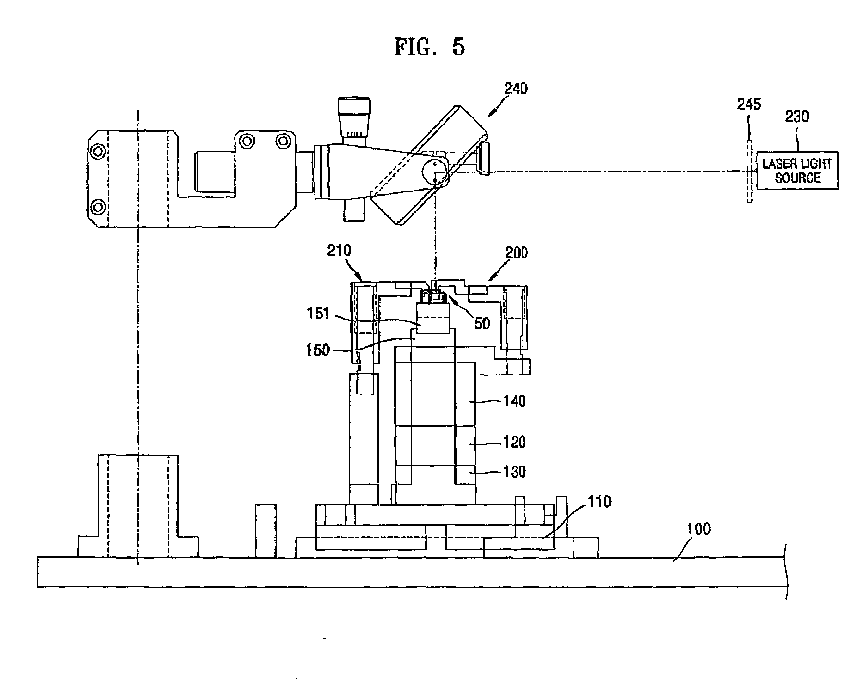

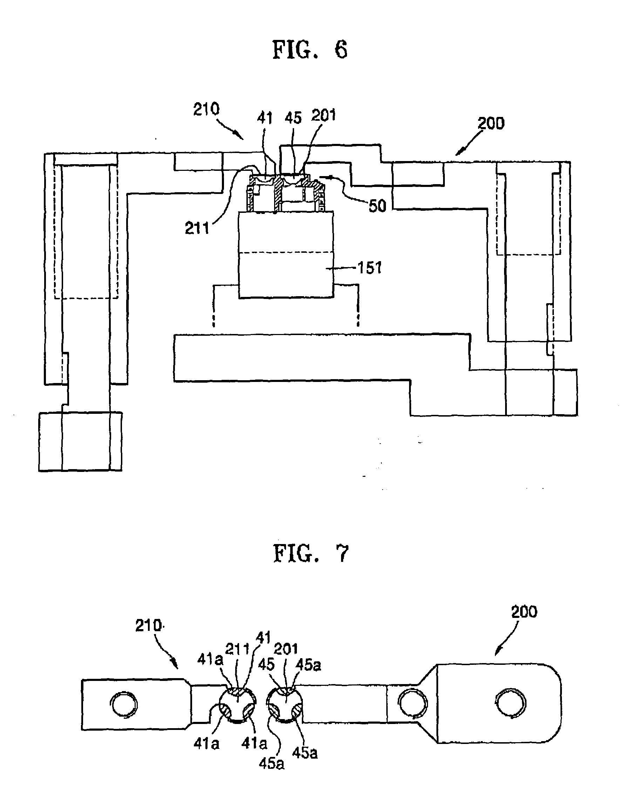

FIG. 5 is a schematic view of a system of a lens assembling apparatus according to an embodiment of the present Invention, FIG. 6 is an enlarged view of a part of FIG. 5, and FIG. 7 is an enlarged view of a lens fixing jig 210 and a lens adjustment jig 200 of FIG. 5. FIGS. 5, 6 and 7 illustrate an embodiment where the objective lens assembling apparatus is configured to be appropriate where the lens holder 50 of FIG. 2 includes the first installation hole 55 having the curved seat surface 55a and the second Installation hole 57 having the non-curved seat surface, e.g., a plane-seat surface 57a.

Referring to FIGS. 5 through 7, the objective lens assembling apparatus comprises: a base 100; a mount 150 having a seat part 151 to seat the lens holder 50 on an upper surface; a lens fixing jig 210 and a lens adjustment jig 200; an inclination adjustment device 140 adjusting an inclination of the first objective lens 45 using the lens adjustment jig 200; and a laser light illumination unit illuminating laser light, such as for example, laser light source 230. The objective lens assembling apparatus may further include a linear movement device 110 changing a position to which the laser light is illuminated, Also, the objective lens assembling apparatus can further include X and/or Y stages 120 and 130 moving the first objective lens 45 with respect to an opening's center of the lens holder 50 after an inclination adjustment of the first objective lens 45.

Except for the laser light illuminating unit, i.e., the lens fixing jig 210, the lens adjustment jig 200, the inclination adjustment device 140, and the mount 150 the remaining elements are all mounted on the base 100. Of course, the laser light illumination unit may also be installed on the base 100.

As described above with reference to FIG. 2, the lens holder 50 has the first installation hole 55 in which the curved seat surface 55a is formed. Referring now to FIGS. 6 and 7, a front end 211 of the lens fixing jig 210 presses the second objective lens 41 inserted into the second installation hole 57 of the lens holder 50 by spring force to maintain the second objective lens 41 in a fixed state. The second installation hole 57 has the seat surface 57a formed as a non-curved surface, e.g., a plane.

During the lens assembling process, a bottom portion of an outer peripheral part of the second objective lens 41 is fixed closely to the seat surface 57a of the second installation hole 57 and the fixed state is maintained.

The lens adjustment jig 200 is configured such that one side of the lens adjustment jig is coupled to the inclination adjustment device 140 and a front end 201 of the lens adjustment jig 200 pressurizes the first objective lens 45 inserted into the first installation hole 55 of the lens holder 50 by spring force. The first installation hole 55 has the seat surface 55a formed as a curved surface. The lens adjustment jig 200 is adjusted by the inclination adjustment device 140, whereby forces pressing various portions of the first objective lens 45 are varied and thus the first objective lens 45 slides along the curved seat surface 55a to adjust the inclination of the first objective lens 45.

The front ends 201 and 211 of the lens adjustment jig 200 and the lens fixing jig 210, pressing the first and second objective lenses 45 and 41 are formed such as to expose peripheral regions (45a, 41a) of the first and second objective lenses 45 and 41 as shown in FIG. 7 so that the light illuminated from the laser light illumination unit to the first and second objective lenses 45 and 41 may be reflected by the peripheral part of the lenses 45 and 41.

The front ends 201 and 211 of the lens adjustment jig 200 and the lens fixing jig 210 are formed such as to expose at least three peripheral regions (41a, 45a) of the first and second objective lenses 45 and 41 so that the front ends 201 and 211 may press the first and second objective lenses 45 and 41 using relatively uniform force. FIG. 7 illustrates an example In which the front ends 201 and 211 of the lens adjustment jig 200 and the lens fixing jig 210 are formed such as to expose three peripheral regions (41a, 45a) of the first and second objective lenses 45 and 41. The laser light beam is reflected through the peripheral regions 41a and 45a.

For the Inclination adjustment device 140, a gonio stage may be provided. The Inclination adjustment device 140 is configured such that the lens adjustment jig 200 is rotated within a predetermined angle range so that pressure applied to the first objective lens 45 by the lens adjustment jig 200 may be varied depending on the position and accordingly the first objective lens 45 slides a little along the curved seat surface 55a of the first installation hole 55 so that inclination of the first objective lens may be adjusted.

The laser light illumination unit includes: a laser light source 230 emitting laser light; and a reflection mirror device 240 reflecting laser light emitted from the laser light source 230 to a lower direction to direct the laser light to the lens holder 50 mounted on the mount 150.

The laser light emitted from the laser light source 230 is bent about 90 degree in by the reflection mirror device 240 and progresses to the lens holder 50 positioned in a lower direction. The laser light is illuminated onto one of the lens holder 50, the first objective lens 45, and the second objective lens 41 and the light reflected by one of them is reflected again by the reflection mirror device 240 and returns back to the laser light source 230.

A target 245 such as a section paper may be placed in front of the laser light source 230 in order to check a position of the light that has returned back to the laser light source 230. The target 245 is used In setting the reference point before the lens inclination adjustment If an inclination of a lens Is adjusted so that a path of light reflected by the lens to be adjusted (the first lens 45 in the present embodiment) coincides with the reference point on the target 245, the central axes of the first and second objective lenses 45 and 41 may be made in parallel to each other.

In the present embodiment, the laser light is illuminated onto the second objective lens 41 and the laser light reflected by the second objective lens 41 passes through the target 245. The position on the target where the laser light passes through is used for the reference point. After that, the position to which the laser light is illuminated is horizontally moved, the laser light is illuminated onto the first objective lens 45, and it is confirmed whether the laser light reflected from the first objective lens 45 passes through the reference point on the target.

If the laser light does not pass through the reference point, the inclination of the first objective lens 45 is adjusted by rotating the lens adjustment jig 200 using the inclination adjustment device 140 until the laser light passes through the reference point on the target 245. When the laser light passes through the reference point on the target 245, the central axis of the first objective lens 45 becomes parallel with the central axis of the second objective lens 41.

The objective lens assembling apparatus may further include a linear movement device 110, i.e., a linear stage linearly moving the position to which the laser light is illuminated.

FIGS. 5 and 6 illustrate an example in which the linear movement device 110 is installed on the base 100 so as to change the position to which the laser light is illuminated by moving the mount 150.

As shown In FIGS. 5 and 6, the lens fixing Jig 210, the lens adjustment jig 200, the mount 150, and the inclination adjustment device 140 are all mounted on the linear movement device 110. Further, an X and/or Y stage 120 and 130 can be mounted on the linear movement device 110.

The objective lens assembling apparatus may further include: the X-stage and/or the Y-stage 120 and 130 performing an operation of matching a center of the first objective lens 45 with an opening's center of the lens holder 50 by moving the first objective lens 45 with respect to the opening's center of the first installation hole 55 of the lens holder 50 after relative inclination adjustment between the plurality of objective lenses. In FIGS. 5 and 6, separate X and Y stages 120 and 130 are provided. As an alternative, one of the X and Y stages 120 and 130 Is provided, or an integral-type X,Y stage may be provided.

The objective lens assembling apparatus may further include the X and/or Y stages mounting the lens fixing jig 210 so as to perform an operation of matching the central axis of the second objective lens 41 with the center of the opening of the second installation hole 57. In that case, the X and/or Y stages are mounted on the linear movement device 110 and the lens fixing jig 210 is Installed on the X and/or the Y stages. Since the arrangement may be sufficiently inferred from the above description with reference to FIGS. 5 to 6, detailed description thereof will be omitted.

Hereinafter, a process of assembling the first and second objective lenses 45 and 41 in the lens holder using the objective lens assembling apparatus according to an embodiment of the present invention described above will be described.

First, the lens holder 50 is seated on the seat part 151 of the mount 150. The second objective lens 41 is inserted Into the second installation hole 57 having the non-curved seat surface 57a and pressed using the lens fixing Jig 210 so that the second objective lens 41 is maintained in a fixed state. The first objective lens 45 is inserted into the first installation hole 55 having the curved seat surface 55a and pressed using the lens adjustment jig 200.

The laser light is illuminated onto the second objective lens 41 to set a reference point on the target 245.

The linear movement device 110 is operated so that the laser light is illuminated onto the first objective lens 45 and a path of the light reflected by the first objective lens 45 is compared with the reference point on the target 245. If the path of the reflected light from the first objective lens is different from the reference point on the target 245 as a result of comparison, the inclination of the first objective lens 45 is adjusted by incrementally rotating the lens adjustment jig 200 using the inclination adjustment device 140 until the path of the light reflected by the first objective lens 45 coincides with the reference point on the target 245. By the above operation, the central axis of the first objective lens 45 may be made parallel with the central axis of the second objective lens 41.

After the relative inclination adjustment between the first and second objective lenses 45 and 41, the X and/or the Y stages 120 and 130 are adjusted so that the lens adjustment jig 200 is moved within a horizontal plane. By this operation, the first objective lens 45 pressed by the lens adjustment jig 200 is moved with respect to the center of the first installation hole 55. The adjustment by the X and/or the Y stages is performed until the center of the first objective lens 45 coincides with the center of the first installation hole 55.

Where the X and/or the Y stages mounting the lens fixing jig 210 are provided, it is possible to match the center of the second objective lens 41 with the center of the second installation hole 57 through adjustment of the X and/or the Y stages.

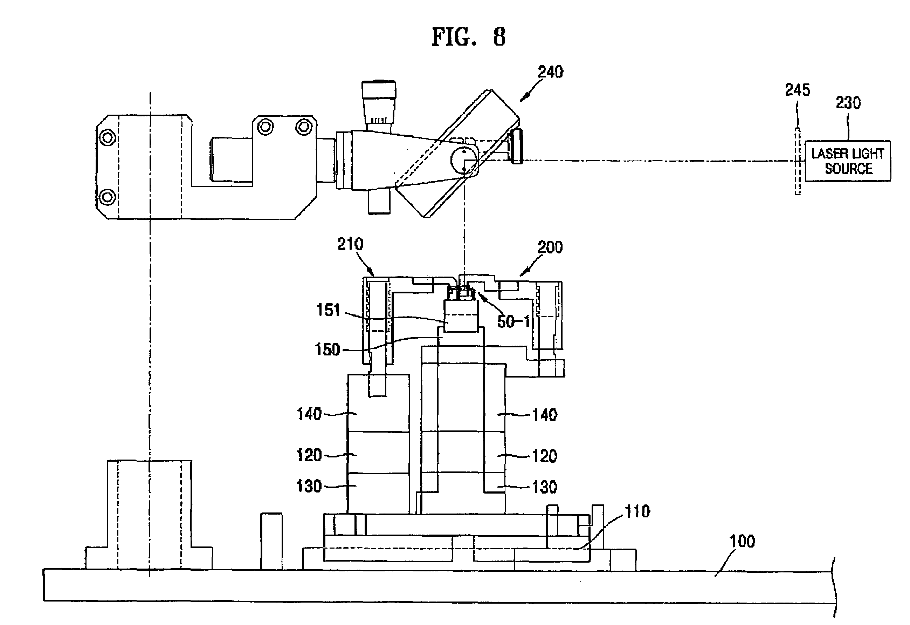

In the embodiments described above, although the description and figures have been made taking, as an example, the objective lens assembling apparatus appropriate where the lens holder 50 of the optical pickup according to an aspect of the present invention has the construction of FIG. 2. the objective lens assembling apparatus of may have a structure in which the assembly and the inclination adjustments of the respective first and second objective lenses 45 and 41 may be performed where the first and second installation holes 55 and 57 have the curved seat surfaces 55a and 57a-1 (structure of FIG. 3) as illustrated in FIG. 8.

Referring to FIG. 8, an objective lens assembling apparatus according to another embodiment of the present invention has two lens adjustment jigs 200 instead of one lens fixing jig 210 and one lens adjustment jig 200, as shown in the first embodiment described with reference to FIGS. 5 through 7, so that an inclination adjustment of the second objective lens 41 may be performed in a similar manner as the first objective lens 45, and additionally, the adjustment of matching the central axis of the second objective lens 41 with the opening's center of the second installation hole 57 may be performed. In FIG. 8, the elements performing substantially the same functions as those of FIGS. 5 through 7 are identified with the same reference numerals and detailed dascriptions thereof will not be repeated.

Referring to FIG. 8, where the objective lens assembling apparatus is configured such that the Inclination adjustment may be performed for both the first and second objective lenses 45 and 41 and the first and second installation holes 55 and 57 of the lens holder 50-1 have the curved-seat surfaces 55a and 57a-1, an objective lens assembling method is performed as follows.

The lens holder 50-1 is seated on the seat part 151 of the mount 150. The first and second objective lenses 45 and 41 are inserted and pressed using the lens adjustment jigs 200, respectively.

After that, the laser light is illuminated onto a predetermined position of the lens holder 50-1 so that the reference point on the target 245 may be set.

Next, the linear movement device 110 is operated so that the laser light Is illuminated onto the second objective lens 41 and the inclination of the second objective lens 41 is adjusted until the path of the light reflected by the second objective lens 41 coincides with the reference point on the target 245.

Then, the linear movement device 110 is operated so that the laser light is illuminated onto the first objective lens 45 and the inclination of the first objective lens 45 is adjusted until the path of the light reflected by the first objective lens 45 coincides with the reference point on the target 245. By the above operation, the central axis of the first objective lens 45 becomes parallel with the central axis of the second objective lens 41.

In addition, after relative inclination adjustment between the first and second objective lenses 45 and 41, the first and second objective lenses 45 and 41 are moved with respect to the respective centers of the first and second installation holes 55 and 57 of the lens holder 50-1, whereby the centers of the first objective lens 45 and the second objective lens 41 are matched with the centers of the first and second installation holes 55 and 57, respectively.

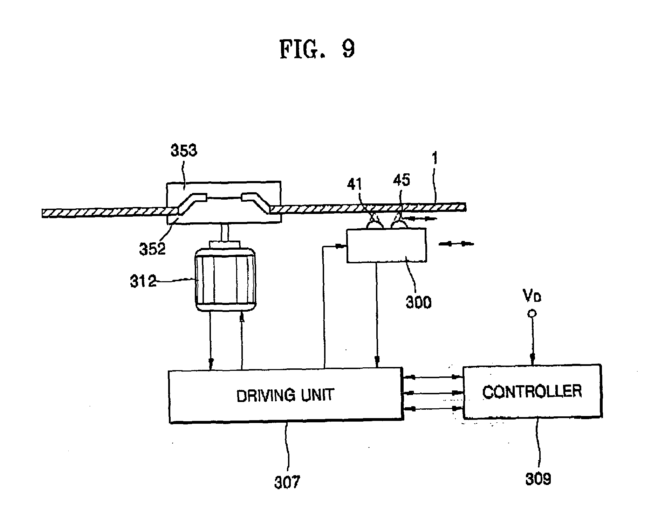

FIG. 9 is a schematic view of a construction of an optical recording and/or reproducing apparatus applying the optical pickup according to an aspect of the present invention.

Referring to FIG. 9, the optical recording and/or reproducing apparatus comprises: a spindle motor 312 for rotating the optical disc 1; an optical pickup 300 installed movably in a radial direction of the optical disc 1 and reproducing information recorded on the optical disc 1 and/or recording the information on the optical disc 1; a driving unit 307 for driving the spindle motor 312 and the optical pickup 300; and a controller 309 controlling a focus servo, tracking and/or tilt servos of the optical pickup 300. The disc 1 is supported and rotated by a turntable 352 and a chucking clamp 353.

The optical pickup 300 Includes an optical system having the first and second objective lenses 45 and 41 condensing light emitted from a light source to the optical disc; and an optical pickup actuator driving the first and second objective lenses 45 and 41, For the optical pickup, the above-described optical pickup is provided.

The light reflected by the optical disc 1 is detected by a photodetector provided in the optical pickup 300 and photoelectric-transformed into an electrical signal. The electrical signal is inputted to the controller 309 through the driving unit 307. The driving unit 307 controls a rotational speed of the spindle motor 312, amplifies the inputted signal, and drives the optical pickup 300. The controller 309 sends a focusing and a tracking servo commands controlled based on a signal input from the driving unit 307, back to the driving unit 307 to allow focusing and tracking servo operations to be realized.

According to the optical recording and/or reproducing apparatus according to an aspect of the present invention, since the first and second objective lenses 45 and 41 are mounted on the single lens holder so that the central axes thereof are in parallel with each other and alignment between the first and second objective lenses 45 and 41 and an optical axis is adjustable using only the actuator skew by adjusting an inclination of the actuator itself. In this way high optical pickup performance can be achieved. Here, if an actuator having a tilt operation is provided for the actuator, an adjustment of the inclination of the actuator may be performed.

According to the technique for assembling the plurality of objective lenses of the optical pickup, an inclination between the plurality of objective lenses can be completed within five minutes, and in such a way that deterioration in reproducing or recording performance for the optical discs that correspond to the respective objective lenses Is prevented.

Since the lens seat surface of at least one installation hole of the plurality of installation holes formed in the lens holder is formed as the curved surface; Inclination adjustment can be properly performed. Inclination adjustment between the plurality of objective lenses can be performed without an increase in the number of the parts or an increase in the number of the assembling processes.

Although a few embodiments of the present invention have been shown and described, it would be appreciated by those skilled in the art that changes may be made in this embodiment without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodlment(s). The invention extends to any novel one, or any novel combination, of the features disclosed in this specification (Including any accompanying claims, abstract and drawings), or to any novel one, or any novel combination, of the steps of any method or process so disclosed.

**Claims**

1. An optical pickup comprising:

   a plurality of objective lenses (41,45); and
   a lens holder (50) having a plurality of installation holes (57,55), each installation hole (57,55) having a seat surface (57a,55a) to receive one of the plurality of objective lenses (41,45), wherein at least one of the seat surfaces (55a) is formed as a curved surface so that inclination of a central axis of the objective lens (45) received therein is adjustable.

2. The optical pickup of claim 1, wherein the seat surface (55a) is formed as a spherical surface.

3. The optical pickup of claim 1 or 2, wherein an inner diameter or an outer diameter of the seat surface (55a) is at least 0.05mm smaller or 0.05mm greater, respectively, than a middle position of the seat surface (55a).

4. The optical pickup of claim 1, 2 or 3 wherein an outer diameter of the seat surface is at least 0.05mm greater than an outer diameter of the objective lens.

5. The optical pickup of any preceding claim, wherein the plurality of objective lenses (41,45) comprise:

   a first objective lens (45) appropriate for a blu-ray disc; and
   a second objective lens (41) appropriate for at least one of a high density digital versatile disc, a digital versatile disc (DVD) and a compact disc (CD).

6. The optical pickup of any one of claims 1-4, wherein the plurality of objective lenses (41,45) comprise:

a first objective lens (45) appropriate for at least one of a high density DVD and a blu-ray disc; and a second objective lens (41) appropriate for at least one of a DVD and a CD.

7. An apparatus for assembling a plurality of objective lenses (41,45) in a plurality of installation holes (27,55) of a lens holder (50) of the optical pickup of any one of claims 1 through 6 so that central axes of the objective lenses (41,45) are parallel, the apparatus comprising:

a mount (150) having a seat part (151) for seating the lens holder (50);
a plurality of lens jigs (210,200) for pressing the plurality of objective lenses (41,45) respectively installed into the installation holes (57,55);
an inclination adjustment device (140) for adjusting the inclination of the objective lens (41) inserted into the at least one installation hole (55) having the curved seat surface (55a) using the lens Jig (200);
a laser light illumination unit (230,240) for setting a reference point and giving out laser light for aligning central axes of the objective lenses (41,45) with respect to the reference point; and
a base (100) for mounting the mount (150), the plurality of lens jigs (210,200), and the inclination adjustment device (140).

8. The apparatus of claim 7, wherein one of the installation holes (57) formed on the lens holder (50) is formed with a non-curved seat surface (57a), a reference point is set by using laser light illuminated onto the objective lens (45) inserted into the installation hole (57) having the non-curved seat surface (57a), and a central axis of each of the plurality of the objective lenses (41,45) is aligned with the reference point.

9. The apparatus of claim 7, wherein each of the plurality of installation holes (57,55) is formed with a curved seat surface (57a-1,55a), a reference point is set by using laser light illuminated onto a predetermined position of the lens holder (50), and the central axes of the plurality of objective lenses (41,45) installed in the plurality of installation holes (51,55) are aligned with the reference point.

10. The apparatus of claim 7, 8 or 9 further comprising a linear movement device (110) for changing a position on which the laser light is illuminated.

11. The apparatus of claim 10, wherein the linear movement device (110) is installed at the base (100) to change a position on which the laser light is illuminated by moving the mount (150).

12. The apparatus of any one of claims 7-11, further comprising at least one of an X-stage (120), a Y-stage (130), or an X-Y stage for matching a center of at least one objective lens (45) with a center of the installation hole (55) of the lens holder by moving the objective lens (45) with respect to the center of the installation hole (55) of the lens holder (50) after a relative inclination adjustment between the plurality of objective lenses (41,45).

13. The apparatus of any one of claims 7-12, wherein the inclination adjustment device (140) comprises a gonio stage.

14. The apparatus of any one of claims 7-13, wherein a front end of the lens jig 5 (210,200) is formed to expose a partial portion of an outer periphery of the objective lens (41,45) when in use so that the light illuminating the objective lens (41,45) from the laser light illumination unit (230,240) is reflected by the exposed partial portion (41a,45a) of the objective lens (41,45).

15. The apparatus of claim 14, wherein the front end (211) of the lens jig (210,200) is formed to expose at least three regions (41a,45a) of the outer periphery of the objective lens (41.45).

16. A method of assembling a plurality of objective lenses (41,45) in a plurality of installation holes (57,55) of the lens holder (50) of the optical pickup of any one of claims 1 through 6 so that central axes of the objective lenses (41,45) are parallel, the method comprising:

configuring the lens holder such that at least one of the plurality of installation holes (57,55) is formed with a curved seat surface (55a) to adjust an inclination of an objective lens (45) installed thereon and another of the plurality of installation holes (57) is formed with a non-curved seat surface (57a);
seating the lens holder (50) on a seat part (151) of a mount (150);
pressing and fixing a first objective lens (41) into the installation hole (57) having the non-curved seat surface (57a);
illuminating laser light onto the first objective lens (41) to set a reference point on a target; and
illuminating laser light onto a second objective lens (45) Inserted into the installation hole (55) having the curved seat surface (55a) and pressing the second objective lens (45);
comparing an optical path of light reflected by the second objective lens (45) with the reference point on the target; and
adjusting an Inclination of the second objective lens (45) so that the central axes of the first and second objective lenses (41,45) are parallel.

**17.** The method of claim 16, further comprising matching a center of the second objective lens (45) with the center of the installation hole (55) of the lens holder by moving the objective lens (45) with respect to the center of the installation hole (55) after relative inclination adjustment between the plurality of objective lenses (41,45).

**18.** A method of assembling a plurality of objective lenses (41,45) in a plurality of installation holes (57,55) of a lens holder (50) of the optical pickup of any one of claims 1 through 6 so that central axes of the objective lenses (41,45) are parallel, the method comprising:

configuring the lens holder (50) such that a seat surface (57a-1, 55) of each of the plurality of installation holes (57,55) is formed as a curved surface to adjust an inclination of the objective lens (41,45) Installed thereon;
seating the lens holder (50) In which the objective lenses (41,45) are respectively inserted into the plurality of installation holes (57,55) on a seat part (151) of a mount (150) and pressing the respective objective lenses into respective seat surfaces (57a-1,55a);
illuminating laser light onto a predetermined position of the lens holder (50) to set a reference point on a target;
illuminating laser light onto the respective objective lenses (41,45);
comparing an optical path of light reflected by each objective lens (41,45) with the reference point on the target; and
adjusting an Inclination of each objective lens (41,45) so that the central axes of the respective objective lenses (41,45) are aligned.

**19.** The method of claim 18, further comprising matching a center of the objective lens (41,45) with the center a respective installation hole (57,55) of the lens holder (50) by moving the objective lens (41,45) with respect to the center of the respective installation hole (57,55) after a relative inclination adjustment between the plurality of the objective lenses (41,45).

FIG. 1

# FIG. 2A

# FIG. 2B

INNER DIAMETER

OUTTER DIAMETER

# FIG. 3A

# FIG. 3B

INNER DIAMETER

OUTTER DIAMETER

# FIG. 3c

# FIG. 4

FIG. 5

## FIG. 6

## FIG. 7

FIG. 8

# FIG. 9